# EUROPEAN PATENT SPECIFICATION

(11) **EP 2 228 988 B1**
(45) Date of publication and mention of the grant of the patent: **08.02.2012**
(21) Application number: 10002087.4
(22) Date of filing: 15.08.2003
(51) Int. Cl.: H04N 7/16, G06F 12/14

(54) **Circuit for restricting data access**
Datenspeicher mit beschränktem Zugang
Circuit pour accès limité à des mémoires

(43) Date of publication of application: 15.09.2010
(62) Divisional of application: 06075049.4
(73) Proprietor: STMicroelectronics (Research & Development) Limited, Marlow, Buckinghamshire SL7 1YL (GB)
(72) Inventor: Dellow, Andrew, Minchinhampton Gloucester GL6 9JG (GB); Bennett, Peter, Nailsea Bristol BS48 4QB (GB)
(74) Representative: Sadler, Peter Frederick

(56) References cited:
- EP-A- 0 897 144
- US-A- 4 442 484
- US-A- 5 251 304
- US-A- 5 469 556
- US-A- 5 684 948
- US-A- 6 154 818
- US-A1- 2003 084 256
- US-B1- 6 292 879

## Description

### FIELD OF THE INVENTION

This invention relates to accessing stored data, and in particular, but not limited to, restricting access to stored data in pay television systems.

### BACKGROUND OF THE INVENTION

In many electronic systems, access to stored data may need to be restricted. For example, in pay television systems, stored data may be in the form of decrypted broadcast television data or encryption or decryption keys used to encrypt or decrypt television data. Subscribers may gain access rights to pay television broadcast services only by making the appropriate payment to the broadcast service provider. It is important therefore that persons not entitled to those services are prevented from accessing relevant data. In particular, it is important to prevent hackers from modifying the system to enable illegitimate insertion or removal of data such as encryption or decryption keys.

Some prior systems provide processors which generate computer instructions to control data access. However, such systems are vulnerable when hackers intercept and illegitimately replace instructions to allow unauthorised access to restricted data.

We have appreciated the need to restrict access to sensitive data. We have further appreciated the need to identify and block illegitimate instructions which attempt to access sensitive data.

### SUMMARY OF THE INVENTION

The invention is defined in the independent claims to which reference may now be made. Advantageous features of the invention are set forth in the dependant claims.

An embodiment of the invention comprises a data memory used to store data, a portion of which may be confidential or privileged. To prevent unauthorised access to privileged data, a privileged data table is provided to maintain a list of those regions of the data memory which contain privileged data. Data access operations are initiated by instructions fetched from an instruction list. When a data access operation is attempted involving a particular region of memory, a privilege rule enforcer compares the address of the memory being accessed to the list of privileged regions stored in the privileged data table. If the memory address falls within a privileged region then the memory access operation is blocked by the privilege rule enforcer unless the instruction accessing the memory is a privileged instruction. An instruction is privileged if it has been securely authorised by a code verifier.

The contents of the privileged data table may be modified by instructions fetched from the instruction list. In order to prevent unauthorised modification of the privileged data table, a privilege table filter is provided to block instructions which attempt to modify the privileged data table but which are not privileged instructions.

To identify privileged instructions, a privileged instruction table is provided to maintain a list of those instructions contained in the instruction list which are privileged. When an instruction is fetched from the instruction list, an instruction privilege identifier compares the instruction being fetched with the list of privileged instructions stored in the privileged instruction table. The instruction privilege identifier then generates a signal indicating the privilege status of the instruction and transmits it to the privilege table filter and privilege rule enforcer which block instructions according to the signal. In one embodiment, the process of blocking unauthorised memory operations may be performed in accordance with a set of further rules as defined by a rule signal input into the privilege rule enforcer.

All components of the system are contained on a single monolithic semiconductor integrated circuit to ensure the security of the system.

### BRIEF DESCRIPTION OF THE FIGURES

**Figure 1** is a block diagram of a semiconductor circuit embodying the invention;
**Figure 2** is a flow diagram of the process used to restrict access to the data memory shown in Figure 1;
**Figure 3** is a diagram of the process used to authenticate instructions.

### DESCRIPTION OF PREFERRED EMBODIMENTS

A system embodying the invention comprises a memory or store 1 for storing data, a portion of which may be confidential and require protection from unauthorised access. Confidential data may be referred to as being privileged, and the term privilege is known to those skilled in the art as meaning 'rights of access'. An advantage of the invention is to allow both privileged and unprivileged data to exist in the same memory store which conserves memory and reduces hardware costs. It is important, for systems such as pay television or other secure systems that the embodying system comprises a monolithic device 2, such as a single semiconductor integrated circuit.

The data memory 1 may be provided by one or more external physical memory devices such as random access memory (RAM), flash memory or a hard disc drive. Alternatively the memory may be provided by one or more on-chip memories. The portions of memory provided by each memory device may be conveniently thought of as mapping onto a single contiguous linear memory space such that each word of memory has a unique address in the memory space.

The data memory 1 may be used for a variety of purposes during operation of the system. For example, the data memory 1 may be used to store decryption keys for decrypting encrypted television signals, or to store decrypted television data. It is important to ensure that unauthorised access to data memory 1 containing privileged data is prevented. For example, the security of the system may be jeopardised if hackers are able to retrieve secret decryption keys from the data memory 1, or insert illegitimate data into the data memory 1.

To maintain the security of the system, data access to or from the data memory 1 is monitored to ensure that illegitimate instructions which attempt to access confidential data are blocked. Some applications may allow access to some data, while other applications may allow access to different data. For example, application code downloaded from the internet should not be allowed access to a content buffer.

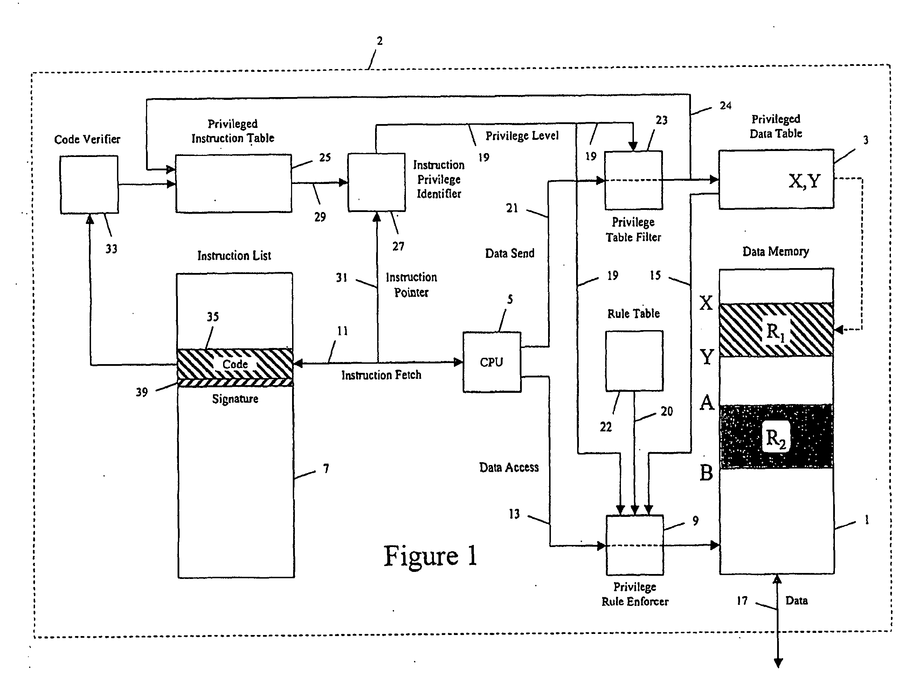

To distinguish between privileged and unprivileged data stored in the data memory 1, a privileged data table 3 is provided which maintains a list of those memory regions of the data memory 1 which contain privileged data. Each contiguous region of memory in the data memory 1 may be defined by a start memory address and an end memory address. The privileged data table 3 stores references to privileged memory regions of the data memory 1 by storing corresponding start and end memory addresses of those regions. For example, a first region of memory 'R₁' illustrated in figure 1 as a dashed area has start memory address X, and end memory address Y. The privileged data table 3 defines this memory region as privileged by storing the memory addresses X and Y as an associated pair. Any data having an address which falls within the range X to Y is privileged. A second region of memory 'R₂' is also illustrated in figure 1 as a shaded region having start and end memory addresses A and B respectively. This memory is not privileged and accordingly no corresponding entry exists in the privileged data table 3. It is understood that storing start and end memory addresses in a table is merely one means to define data as privileged, and that other embodiments also fall within the scope of the present invention.

Data memory 1 read or write operations are initiated by a central processing unit (CPU) 5 which fetches suitable computer instructions from an instruction list 7 via communication link 11. The data memory 1 is then accessed via communication link 13. The instruction list 7 comprises a memory arranged to store instructions for use during operation of the system. A privilege rule enforcer 9, for example a window comparator, is provided along communication link 13 between the CPU 5 and the data memory 1 to selectively block access signals transmitted along communication link 13. The privilege rule enforcer 9 receives data stored in the privileged data table 3 at a first input via communication link 15. Each memory operation instruction 'I' fetched from the instruction list 7 contains the address 'Z' of the memory to which data is to be stored or from which data is to be retrieved.

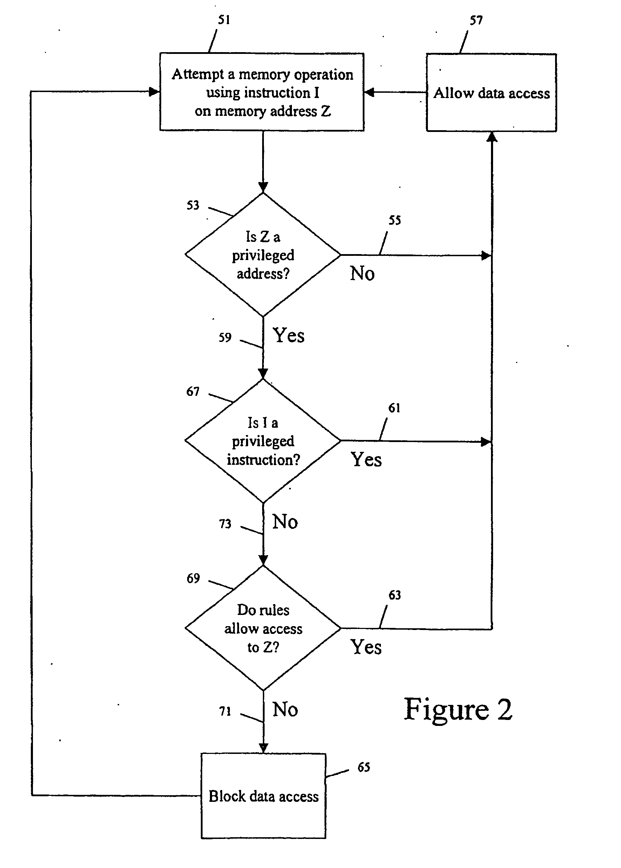

Figure 2 is a flow diagram of the process carried out to restrict access to the data memory 1. When a data memory operation is attempted at data access step 51, the CPU 5 transmits the fetched instruction along communication link 13. The privilege rule enforcer 9 intercepts the instruction and compares the memory address Z specified in the instruction to the list of privileged regions stored in the privileged data table 3. The privilege rule enforcer 9 then determines, at data privilege checking step 53, whether the memory address Z falls within at least one region of privileged data defined by the privileged data table 3. If the memory region Z being accessed is not privileged and thus contains only non-confidential data 55, the memory operation is allowed to proceed at proceed step 57. In this case, the data memory 1 receives the instruction, retrieves or stores data according to the instruction, and transmits the data via communication link 17 to a selected destination where appropriate.

If the memory region being accessed is privileged 59 as defined by the privileged data table 3, then the memory operation instruction is blocked by the privilege rule enforcer 9 unless one or more of a number of conditions are satisfied. According to a first condition, a memory operation is allowed to proceed if the instruction performing the operation is privileged. A privileged instruction is one which has been securely authorised by a code verifier by a process described in more detail below. In the preferred embodiment, a second condition is defined so that a memory operation is allowed to proceed only if the operation obeys one or more predetermined selection rules.

For the first condition, the privilege rule enforcer 9 receives a privilege level signal via communication link 19 at a second input indicating the privilege level of an instruction. For example, a privilege level of 1 indicates that the instruction is privileged and has been verified, and a privilege level of 0 indicates that the instruction is not privileged and may be illegitimate. The origin and nature of the privilege level signal shall be described in more detail below. The privilege rule enforcer 9 then determines, at instruction privilege checking step 67, from the status of privilege level signal if the instruction I is privileged or not. If the instruction is privileged 61 then the privilege rule enforcer 9 allows the data operation to proceed, at proceed step 57. If the instruction is not privileged 73, then one or more further conditions may need to be satisfied before the memory operation is allowed to proceed.

For the second condition, the privilege rule enforcer 9 receives a rule signal via communication link 20 at a third input which defines a number of rules which determine the allowability of various data access operations. The rule signal is generated by a rule table 22 which comprises a lookup table containing a plurality of predetermined data access rules. The interpretation of rules may be performed by either hardware or software. For example, a rule may be defined so that access to the data memory 1 is only allowed if the instruction contains a specified secret key. The privilege rule enforcer 9 then determines, at rule checking step 69, if the data access operation conforms to the rules defined in the rule table 22. If the rules are obeyed 63 then the memory access operation is allowed to proceed, at proceed step 57. If the rules are broken 71 then the memory access operation is blocked, at blocking step 65.

It can be seen that the privilege rule enforcer 9 acts to restrict access to the data memory 1 depending on whether the data being accessed is privileged, whether the instruction attempting the access is privileged, and whether the data access is allowed by one or more rules. It is understood that data access may be allowed if only one condition is satisfied as with the embodiment described above, or only if several conditions are satisfied in combination, or only if all conditions are satisfied.

During operation of the system, it may be necessary to dynamically allocate and release various portions of the data memory 1. It is therefore necessary that the privileged data table 3 is dynamically updated to reflect changes in privileged regions of the data memory 1. The list of privileged memory regions stored in the privileged data table 3 may be modified by suitable instructions fetched from the instruction list 7 by the CPU 5 via communication link 11. The instructions are transmitted via communication link 21 to the privileged data table 3 where entries may be added, removed, or modified according to the instruction. It is important to prevent hackers from feeding illegitimate instructions to the privileged data table 3 to modify the list of privileged regions, thereby allowing unauthorised access to the data memory 1. For example, a hacker may attempt to circumvent security by inserting instructions into the instruction list 7.

To maintain the security of the system, instructions which attempt to modify the contents of the privileged data table 3 are blocked unless they are privileged. A privilege table filter 23 is provided along communication link 21 between the CPU 5 and the privileged data table 3 to selectively block instructions transmitted along communication link 21. The privilege table filter 23 receives a privilege level signal via communication link 19 at a first input indicating the privilege level of each instruction, and intercepts and blocks an instruction if the privilege level signal indicates that the instruction is not privileged. The privilege level signal input into the privilege table filter 23 is of a similar nature to the privilege level signal of the second input of the privilege rule enforcer 9. In one embodiment, the privilege table filter 23 selectively blocks instructions in accordance with a set of selection rules in a similar manner to that of the privilege rule enforcer 9. In this case the privilege table filter 23 receives a rule signal at a second input generated by the rule table 22.

The process by which instructions are identified as privileged and by which the privilege level signals are generated will now be described. The instruction list 7 is arranged to store computer code and other instructions for use during operation of the system. In particular, the instruction list 7 includes instructions which allow access to the data memory 1, and allow modification of the privileged data table 3 and the privileged instruction table 25. A hacker may attempt to gain unauthorised access to the data memory 1 by storing illegitimate instructions in the instruction list 7. To distinguish between privileged and unprivileged instructions, a privileged instruction table 25 is provided to store references to those instructions stored in the instruction list 7 which are privileged. Each instruction stored on the instruction list 7 has a unique memory address which may be referenced by an instruction pointer. The privileged instruction table 25 stores a list of instruction pointers referencing those instructions which are privileged.

When the CPU 5 fetches an instruction from the instruction list 7, the appropriate instruction pointer is transmitted along communication link 11 to the instruction list 7, allowing the instruction to be retrieved and transmitted back to the CPU 5. Additionally, the instruction pointer of the instruction being fetched is also transmitted along communication link 31 to an instruction privilege identifier 27. The instruction privilege identifier 27, for example a window comparator receives the instruction pointer transmitted by the CPU 5 and compares it to the list of pointers stored in the privileged instruction table 25. The instruction privilege identifier 27 receives data stored in the privileged instruction table 25 via communication link 29. The instruction privilege identifier 27 attempts to find a matching entry in the privileged instruction table 25 to determine if the instruction is privileged. A privilege level signal is then generated by the instruction privilege identifier 27 to indicate the privilege status of the instruction. The privilege level signal is transmitted via communication link 19 to the privilege table filter 23 and the privilege rule enforcer 9 where the signal is used to selectively block instructions by the process described above.

It is understood that a portion of program code containing a plurality of privileged instructions may be defined as privileged in a similar manner as for individual instructions. If an entire contiguous block of code is privileged, then the privileged instruction table 25 may alternatively store the start and end memory addresses of the region of memory of the instruction list 7 containing the code block in a similar manner to that of the privileged data table 3. In this case, a privilege level signal is generated when a portion of code is retrieved from the instruction list 7. Defining blocks of code as privileged rather that individual instructions increases the efficiency of the system.

In one embodiment, the privilege level signal may correspond to the level of verification which has been performed on each instruction so that an instruction may be assigned one of many privilege levels. For example, computer instruction stored on read only memory (ROM) may be assigned the highest privilege level. Instructions which are stored on RAM, but which have been securely verified may be assigned a lower privilege level. Instructions which are stored on RAM and which have not been verified may be assigned the lowest privilege level, for example zero.

The privilege level may also restrict access to only particular subsets of data. For example a high privilege level may allow access to all data, while a lower privilege level may only allow access to a portion of the privileged data. The lowest privilege level will allow access to unprivileged data only. Each portion of data is assigned a privilege level which indicates the privilege level threshold required to access that particular data. The privilege level signal may also contain timeout information which restricts the amount of time a particular memory operation is allowed to last before being terminated, for example 10 minutes.

A privilege level may be defined separately for read and write operations. For example, particular instructions may only write data if the 'write' privilege level of those instructions is above a first threshold. Similarly, particular instructions may only read data if the 'read' privilege level of those instructions is above a second threshold. The first and second thresholds for read and write operations may be different, so that, for example, particular instructions may be authorised to read all data within the system, but may not be authorised to write data to any parts of the system.

In all cases, the rule signal 20 may be used to interpret the privilege level signal. For example, a rule may be defined so that, initially, only instruction stored in ROM have full access to all data, and other instructions have reduced access, such as read-only access.

The process by which instructions are verified and assigned a privileged status will now be described. A code verifier 33 is provided to authenticate instructions stored in the instruction list 7 and to modify the contents of the privileged instruction table 25 accordingly. The code verifier 33 may be for example a hardware based signature verifier, or a dedicated CPU. To verify the contents of the instruction list 7, a code signature 39 is stored in association with each portion of code 35 stored in the instruction list 7. A portion of code 35 may comprise one or more instructions, possibly several kilobytes in size.

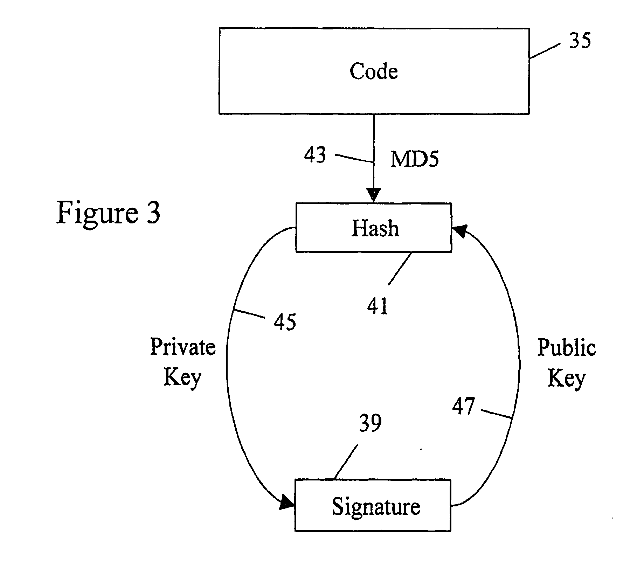

Figure 3 is a diagram of the process used to authenticate the contents of the instruction list 7 in which arrows represent one way transformations. A code signature 39 is computed from a portion of code 35 by a sequence of two transformations. A hash value 41 of the code portion 35 is first computed using any suitable hash algorithm 43, for example MD5. A hash is a transformation which takes a variable size input, in this case the code portion 35, and outputs a string of fixed length that is the hash value 41. The hash transform 43 is a one way function such that it is computationally infeasible to find an input which generates a specified output hash value. The hash transform 43 also has the property that it is computationally infeasible to find two distinct inputs which generate identical output hash values. The hash value 41 is then encrypted in accordance with a secret key 45 to generate a code signature 39. The security of the system relies on the confidentiality of the secret key.

To verify a portion of code 35 stored in the instruction list 7, the code verifier 33 computes a first hash value 41 from the code portion 35 using a specified hash algorithm 43, and computes a second hash value 41 by decrypting the code signature 39 using a public key 47. The code portion 35 is defined as privileged if a predetermined relationship exists between the first and second computed hash values 41, for example if the two hash values 41 are identical.

Initially, the instruction list 7 and privileged instruction table 25 are both empty. When a code portion 35 is stored in the instruction list 7, the corresponding signature 39 is computed and stored in association with the code portion 35. In one embodiment, code 35 is loaded from a ROM portion of memory into the instruction list 7 upon initialisation of the system. The code verifier 33 retrieves the code portion 35 and its associated signature 39 from the instruction list 7 and attempts to verify the code portion 35 using the signature 39. If the verification is successful, the code verifier 33 transmits a signal to instruct the privileged instruction table 25 to create a new reference to the verified code portion 35. The code portion 35 is then defined as privileged by virtue of the newly created entry in the privileged instruction table 25. If the verification is unsuccessful, then no entry in the privileged instruction table 25 is created and the code portion 35 is not privileged. In one embodiment, entries in the privileged instruction table 25 may also be made by an initial authority device comprising a hardware based state machine which may, or may not be on the monolithic circuit 2.

Modification of the privileged instruction table 25 by addition, removal or alteration of entries may also be made by instructions which have previously been defined as privileged. In this case, suitable instructions are fetched from the instruction list 7 and transmitted to the privilege table filter 23. If the privilege table filter 23 receives a privilege level signal indicating that the instruction is privileged, then the instruction is transmitted via communication link 24 to the privileged instruction table 25 which is modified accordingly. If the instruction is not privileged then the privilege table filter 23 blocks the instruction and no entry in the privileged instruction table 25 is created.

In one embodiment, the program that performs the code verifying algorithms is stored on a ROM portion of the instruction list 7. In this case, the privileged instruction table 25 has a ROM portion which contains a reference to the ROM portion of the instruction list 7, thus defining the code verifying program as privileged. The code verifier 33 retrieves the code verifying program from the instruction list 7 and executes the code verifying algorithms. Alternatively, the code verifying program may be executed by the CPU 5.

Since the code verifier 33 executes code stored on ROM which cannot be overwritten and is created at the manufacturing stage, the code verifying program is privileged code which is trusted. Only those instructions which are correctly verified by the trusted code verifier 33 can be defined as privileged and become trusted themselves. The difficulty in generating correct code signatures 39 without knowledge of the secret key ensures that hackers are unable to insert and utilise illegitimate instructions since the code verification will fail and the instructions will be blocked. Only privileged instruction are allowed to modify the contents of the privilege data table 3 and the privileged instruction table 25 so that the contents of the privileged data table 3 and the privileged instruction table 25 are in turn trusted. Finally, access to the data memory 1 and ability to define instructions as privileged are restricted according to the contents of the privileged data table 3 and privileged instruction table 25.

The code verifier 33 and instruction privilege identifier 27 act to verify portions of code 35 and to indicate the privilege status of this code 35 to other parts of the system, in particular those parts of the system which assign other portions of data as privileged. The present invention maintains the security of data access by ensuring that all potentially vulnerable software aspects of the system are trusted. It can be seen that an advantage of the

The code verifier 33 and instruction privilege identifier 27 act to verify portions of code 35 and to indicate the privilege status of this code 35 to other parts of the system, in particular those parts of the system which assign other portions of data as privileged. The present invention maintains the security of data access by ensuring that all potentially vulnerable software aspects of the system are trusted. It can be seen that an advantage of the present invention is to allow one portion of code to assign a privilege to another portion of code in a secure system, and in particular to perform this process dynamically.

Preferably, all hardware components of the system are contained on a single monolithic circuit 2 to prevent illegitimate replacement of components and maintain security. Any components which may not be on the monolithic circuit 2, for example the data memory 1 or instruction list 7, communicate with the monolithic circuit 2 only via encryption based communication links. Here, data to or from the off-chip components is encrypted using a secret key before it is transmitted along communication links to or from inputs or outputs on the monolithic circuit 2. This process protects vulnerable external communication links which may be transmitting privileged data.

## Claims

1. A semiconductor integrated circuit (2) for restricting access to stored data in which computer instructions (35) are used to access data, comprising:
- a data memory (1) or an encryption based communication link to a data memory, the data memory for storing data, at least a portion of which is privileged;
- a processor (5) connected to the data memory by a communication link (13);
- a privileged data table (3) for storing an indication of which regions of the data memory (1) contain privileged data;
**characterized by**
- the semiconductor integrated circuit being monolithic; and by
- a hardware based privilege rule enforcer (9), located on the communication link between the processor and the data memory, arranged to receive information (15) contained in the privilege data table (3) and to receive a privilege level signal (19) indicating whether an instruction (35) is privileged, and to selectively block instructions (35) according to the information received from the privilege data table and the privilege level signal.

2. The semiconductor integrated circuit of any of claim 1 in which the privileged data table (3) is a lookup table.

3. The semiconductor integrated circuit of any of claims 1 or 2 in which the privileged data table (3) stores a list of start and end memory addresses of those regions of the data memory (1) which contain privileged data.

4. The semiconductor integrated circuit of any of claims 1 to 3 in which the privileged data table (3) contains an indication of the privilege level of portions of data stored in the data table (1).

5. The semiconductor integrated circuit of any of claims 1 to 4 in which the privilege level of data indicates which instructions (35) are allowed to access the data.

6. The semiconductor integrated circuit of any of claims 1 to 5 in which the privilege level of data is represented by a numerical value.

7. The semiconductor integrated circuit of any of claims 1 to 6 in which data having a first privilege level is only accessible by those instructions having a second privilege level equal to or above the first privilege level.

8. The semiconductor integrated circuit of any of claims 1 to 7 in which the privilege rule enforcer (9) is a window comparator.

9. The semiconductor integrated circuit of any of claims 1 to 8 further comprising a privilege table filter (23) arranged to receive a privilege level signal (19) at an input indicating the privilege level of an instruction (35) and to selectively block instructions (35) which attempt to modify the contents of the privileged data table (3) according to the privilege level input.

10. The semiconductor integrated circuit of any preceding claim wherein the privilege rule enforcer is arranged to receive a rule signal (20) representative of a data selection rule.

11. The semiconductor integrated circuit of claim 10 further comprising a rule table arranged to store one or more selection rules, the rule signal being generated by the rule table.

12. The semiconductor integrated circuit of claim 10 or 11 in which the rule signal (20) is defined so that instructions not stored on ROM have a more restricted access to data than instructions stored on ROM.

13. The semiconductor integrated circuit of claim 10, 11 or 12 in which the rule signal (20) is defined so that the instructions stored on ROM have full access to all data within the system.

14. The semiconductor integrated circuit of any of claims 10 - 13 in which the rule signal (20) is defined so that the instructions not stored on ROM have only read-only access to data.

15. A pay television system including the circuit of any of claims 1 to 14.

## Patentansprüche

1. Integrierte Halbleiterschaltung (2) zum Beschränken des Zugangs zu gespeicherten Daten, wobei Computerbefehle (35) zum Zugreifen auf Daten verwendet werden, die Folgendes umfasst:
- einen Datenspeicher (1) oder eine verschlüsselungsbasierte Kommunikationsverbindung zu einem Datenspeicher, wobei der Datenspeicher zum Speichern von Daten dient, von denen wenigstens ein Teil privilegiert ist;
- einen mit dem Datenspeicher durch eine Kommunikationsverbindung (13) verbundenen Prozessor (5);
- eine privilegierte Datentabelle (3) zum Speichern einer Anzeige dafür, welche Regionen des Datenspeichers (1) privilegierte Daten enthalten;
**dadurch gekennzeichnet, dass**:
- die integrierte Halbleiterschaltung monolithisch ist; und durch
- einen auf der Kommunikationsverbindung zwischen dem Prozessor und dem Datenspeicher befindlichen hardwarebasierten Privilegregeldurchsetzer (9) zum Empfangen von Informationen (15), die in der Privilegdatentabelle (3) enthalten sind, und zum Empfangen eines Privilegstufensignals (19), das anzeigt, ob ein Befehl (35) privilegiert ist, und zum selektiven Blockieren von Befehlen (35) gemäß den von der Privilegdatentabelle und dem Privilegpegelsignal empfangenen Informationen.

2. Integrierte Halbleiterschaltung nach Anspruch 1, wobei die privilegierte Datentabelle (3) eine Lookup-Tabelle ist.

3. Integrierte Halbleiterschaltung nach Anspruch 1 oder 2, wobei die privilegierte Datentabelle (3) eine Liste von Anfangs- und Endspeicheradressen derjenigen Regionen des Datenspeichers (1) ist, die privilegierte Daten enthalten.

4. Integrierte Halbleiterschaltung nach einem der Ansprüche 1 bis 3, wobei die privilegierte Datentabelle (3) eine Anzeige der Privilegstufe von Datenteilen enthält, die in der Datentabelle (1) gespeichert sind.

5. Integrierte Halbleiterschaltung nach einem der Ansprüche 1 bis 4, wobei die Datenprivilegstufe anzeigt, welche Befehle (35) auf die Daten zugreifen dürfen.

6. Integrierte Halbleiterschaltung nach einem der Ansprüche 1 bis 5, wobei die Datenprivilegstufe durch einen Zahlenwert repräsentiert wird.

7. Integrierte Halbleiterschaltung nach einem der Anspruche 1 bis 6, wobei Daten mit einer ernsten Privilegstufe nur für Befehle mit einer zweiten Privilegstufe zugängig sind, die gleich oder höher ist als die erste Privilegstufe.

8. Integrierte Halbleiterschaltung nach einem der Ansprüche 1 bis 7, wobei der Privilegregeldurchsetzer (9) ein Fensterkomuarator ist.

9. Integrierte Halbleiterschaltung nach einem der Ansprüche 1 bis 8, die ferner ein Privilegtabellenfilter (23) zum Empfangen eines Privilegstufensignals (19) an einem Eingang umfasst, das die Privilegstufe eines Befehls (35) anzeigt und selektiv Befehle (35) blockiert, die versuchen, den Inhalt der privilegierten Datentabelle (3) gemäß dem Privilegstufeneingang zu modifizieren.

10. Integrierte Halbleiterschaltung nach einem der vorherigen Ansprüche, wobei der Privilegregeldurchsetzer die Aufgabe hat, ein Regelsignal (20) zum empfangen, das für eine Datenauswahlregel repräsentativ ist.

11. Integrierte Halbleiterschaltung nach Anspruch 10, die ferner eine Regeltabelle zum Speichern von einer oder mehreren Auswahlregeln umfasst, wobei das Regelsignal von der Regeltabelle erzeugt wird.

12. Integrierte Halbleiterschaltung nach Anspruch 10 oder 11, wobei das Regelsignal (20) so definiert wird, dass nicht auf ROM gespeicherte Befehle einen beschränkteren Zugang zu Daten haben als auf ROM gespeicherte Befehle.

13. Integrierte Halbleiterschaltung nach Anspruch 10, 11 oder 12, wobei das Regelsignal (20) so definiert wird, dass die auf ROM gespeicherten Befehle vollen Zugang zu allen Daten in dem System halben.

14. Integrierte Halbleiterschaltung nach einem der Ansprüche 10-13, wobei das Regelsignal (20) so definiert ist, dass die nicht auf ROM gespeicherten Befehl Nur-Lese-Zugang zu Daten haben.

15. Bezahlfernsehsystem, das die Schaltung nach einem der Ansprüche 1 bis 14 umfasst.

## Revendications

1. Circuit intégré à semi-conducteur (2) pour limiter l'accès à des données en mémoire, dans lequel des instructions informatiques (35) sont utilisées pour accéder les données, comprenant :
- une mémoire de données (1) ou une liaison de communication, basée sur le chiffrement, avec une mémoire de données, la mémoire de données destinée au stockage de données, dont une portion au moins est privilégiée;
- un processeur (5) connecté à la mémoire de données par une liaison de communication (13);
- une table de donnée privilégiées (3) pour stocker une indication de quelles régions de la mémoire de données (1) contiennent des données privilégiées;
**caractérisé par**
- le circuit intégré à semi-conducteur étant monolithique;
et par
- un dispositif d'application de règles de privilèges (9) basé sur matériel, situé sur la liaison de communication entre le processeur et la mémoire de données, arrangé pour recevoir des informations (15) contenues dans la table de données privilégiées (3) et pour recevoir un signal de niveau de privilège (19) indiquant si une instruction (35) est privilégiée ou non et pour bloquer sélectivement des instructions (35) conformément aux informations reçues de la table de données privilégiées et au signal de niveau de privilège.

2. Circuit intégré à semi-conducteur selon une partie quelconque de la revendication 1, dans lequel la table de données privilégiées (3) est une table de consultation.

3. Circuit intégré à semi-conducteur selon l'une quelconque des revendications 1 ou 2, dans lequel la table de données privilégiées (3) stocke une liste d'adresses en mémoire de commencement et de fin de ces régions de la mémoire de données (1) qui contiennent des données privilégiées.

4. Circuit intégré à semi-conducteur selon l'une quelconque des revendications 1 à 3, dans lequel la table de données privilégiées (3) contient une indication du niveau de privilège de portions de données stockées dans la table de données (1).

5. Circuit intégré à semi-conducteur selon l'une quelconque des revendications 1 à 4, dans lequel le niveau de privilège des données indique quelles sont les instructions (35) qui sont autorisées à accéder les données.

6. Circuit intégré à semi-conducteur selon l'une quelconque des revendications 1 à 5, dans lequel le niveau de privilège des données est représenté par une valeur numérique.

7. Circuit intégré à semi-conducteur selon l'une quelconque des revendications 1 à 6, dans lequel les données ayant un premier niveau de privilège ne sont accessibles que par ces instructions ayant un deuxième niveau de privilège égal ou supérieur au premier niveau de privilège.

8. Circuit intégré à semi-conducteur selon l'une quelconque des revendications 1 à 7, dans lequel le dispositif d'application des règles de privilèges (9) est un comparateur de fenêtres.

9. Circuit intégré à semi-conducteur selon l'une quelconque des revendications 1 à 8, comprenant en outre un filtre de table de privilèges (23) arrangé pour recevoir un signal de niveau de privilège (19) à une entrée, indiquant le niveau de privilège d'une instruction, (35) et pour bloquer sélectivement des instructions (35) qui tentent de modifier le contenu de la table de données privilégiées (3) conformément à l'entrée de niveau de privilège.

10. Circuit intégré à semi-conducteur selon l'une quelconque des revendications précédentes, dans lequel le dispositif d'application de règles de privilèges est arrangé pour recevoir un signal de règle (20) représentatif d'une règle de sélection de données.

11. Circuit intégré à semi-conducteur selon la revendication 10, comprenant en outre une table de règles arrangée pour stocker une ou plusieurs règles de sélection, le signal de règle étant généré par la table de règles.

12. Circuit intégré à semi-conducteur selon la revendication 10 ou 11, dans lequel le signal de règle (20) est défini de sorte que les instructions non stockées sur la ROM ont un accès plus limite aux données que les instructions stockées sur la ROM.

13. Circuit intégré à semi-conducteur selon la revendication 10, 11 ou 12, dans lequel le signal de règle (20) est défini de sorte que les instructions stockées sur la ROM ont plein accès à toutes les données dans le système.

14. Circuit intégré à semi-conducteur selon l'une quelconque des revendications 10 - 13, dans lequel le signal de règle (20) est défini de sorte que les instructions non stockées sur la ROM ont un accès de lecture seulement aux données.

15. Système de télévision payante comprenant un circuit selon l'une quelconque des revendications 1 à 14.
